**Europäisches Patentamt**

**European Patent Office**

**Office européen des brevets**

(11) Veröffentlichungsnummer: **0 032 220**
**B1**

(12) **EUROPÄISCHE PATENTSCHRIFT**

(45) Veröffentlichungstag der Patentschrift:
20.07.83

(51) Int. Cl.³: **G 01 S 3/04**

(21) Anmeldenummer: **80107975.7**

(22) Anmeldetag: **17.12.80**

(54) **Funkpeiler mit simulierter Rotation des Antennendiagramms.**

(30) Priorität: **09.01.80 DE 3000561**

(43) Veröffentlichungstag der Anmeldung:
**22.07.81 Patentblatt 81/29**

(45) Bekanntmachung des Hinweises auf die Patenterteilung:
**20.07.83 Patentblatt 83/29**

(84) Benannte Vertragsstaaten:
**FR GB IT NL**

(56) Entgegenhaltungen:
**DE-A-1 815 926**
**DE-A-2 212 429**
**DE-B-1 099 009**
**DE-B-2 613 055**
**US-A-2 408 119**

(73) Patentinhaber: **Rohde & Schwarz GmbH & Co. KG,
Mühldorfstrasse 15, D-8000 München 80 (DE)**

(72) Erfinder: **Ernst, Bernhard, Lindenstrasse 1,
D-8011 Anzing (DE)**
Erfinder: **Schmengler, Eckhard, Dr., Birkenau 23,
D-8000 München 90 (DE)**
Erfinder: **Pichl, Hans, Plettstrasse 40,
D-8000 München 83 (DE)**

(74) Vertreter: **Graf, Walter, Sckellstrasse 1,
D-8000 München 80 (DE)**

## Funkpeiler mit simulierter Rotation des Antennendiagramms

Die Erfindung betrifft einen Funkpeiler laut erstem Teil (Oberbegriff) des Patentanspruchs 1.

Funkpeiler dieser Art sind bekannt (DE-B Nrn. 1204288, 2613055 und US-A Nr. 4148034). Durch die gegenläufigen Abtastvorgänge werden Peilfehler, die durch Laufzeitdifferenzen in den Zuleitungen und in den Empfangskanälen auftreten, weitestgehend kompensiert. Wenn die beiden Abtastvorgänge für Rechts- und Linksrotation zeitlich nacheinander durchgeführt werden, ist eine Peilauswertung erst nach einem vollständigen Zyklus mehrerer gegenläufiger Umläufe möglich, also erst nach längerer Zeit.

Dieser Nachteil gilt auch für die bekannte Massnahme, die beiden Abtastvorgänge mit ein und derselben Umlaufabtasteinrichtung gleichzeitig und mit gleicher Umlauffrequenz durchzuführen und die eigentliche Peilauswertung nach dem Prinzip einer Minimumpeilung vorzunehmen, d.h. die als Peilinformation dienende Phasenmodulation auf Null abzugleichen (Anspruch 5 nach DE-AS Nr. 2613055). Auch hier sind nämlich wieder viele Umläufe für ein Peilergebnis nötig.

Eine andere bekannte Massnahme, nämlich die beiden Abtastvorgänge wiederum mit ein und derselben Umlaufabtasteinrichtung gleichzeitig durchzuführen, jedoch mit unterschiedlichen Umlauffrequenzen, und die Trennung der zeitlichen Phasenverläufe der beiden Umläufe in der Auswerteinrichtung durch frequenzselektive Mittel vorzunehmen (Anspruch 4 nach DE-AS Nr. 2613055) würde zwar theoretisch die Peilzeit verkürzen, sie besitzt jedoch wieder den Nachteil, dass der laufzeitbedingte Peilfehler nicht mehr kompensiert wird, da sich dieser ja aus dem Produkt aus Gruppenlaufzeit und Umlauffrequenz zusammensetzt. Durch die unterschiedlichen Umlauffrequenzen tritt also selbst bei gleicher Laufzeit wiederum ein Peilfehler auf und somit bestehen für diese bekannte Massnahme nicht mehr die obenerwähnten Vorteile der Peilfehlerkompensation.

Es ist Aufgabe der Erfindung, einen Funkpeiler der eingangs erwähnten Art zu schaffen, der bei einfachstem Aufbau eine schnelle Peilauswertung beispielsweise während nur eines Umlaufs der Antennencharakteristik ermöglicht und bei dem trotzdem laufzeitbedingte Peilfehler eliminiert sind.

Diese Aufgabe wird ausgehend von einem Funkpeiler laut Oberbegriff des Patentanspruches 1 durch dessen kennzeichnende Merkmale gelöst. Vorteilhafte Weiterbildungen insbesondere bezüglich einer besonders einfachen eindeutigen Peilwertanzeige ergeben sich aus den abhängigen Ansprüchen.

Bei dem erfindungsgemässen Funkpeiler werden die beiden Abtastvorgänge für Rechts- und Linksrotation durch zwei getrennte Umlaufabtasteinrichtungen gewonnen und dies ermöglicht es, die so hochfrequenzmässig erzeugten Peilinformationen für Rechts- und Linksrotation in zwei getrennten Empfangskanälen aufzubereiten und dann getrennt der Auswerteinrichtung zuzuführen, in welcher dann in bekannter Weise die Einfallsrichtung bestimmt wird. Nachdem durch die gleichzeitige Abtastung die Peilsignale gleichzeitig auftreten, kann aus ihnen bereits nach einem einzigen Umlauf die Einfallsrichtung bestimmt werden; es ist also eine extrem schnelle Auswertung möglich. Da diese gleichzeitige Abtastung ausserdem mit gleicher Umlauffrequenz und die Aufbereitung in zwei getrennten Empfangskanälen durchgeführt wird, besitzt der erfindungsgemässe Funkpeiler weiterhin die bekannten guten Eigenschaften für die Kompensation von laufzeitbedingten Peilfehlern. Die beiden getrennten Empfangskanäle können in moderner Schaltungstechnik sehr einfach mit praktisch gleicher Gruppenlaufzeit hergestellt werden, so dass hierdurch keine wesentliche Verschlechterung der Peilfehlerkompensation zu befürchten ist.

Die Erfindung wird im folgenden anhand von schematischen Zeichnungen an Ausführungsbeispielen näher erläutert.

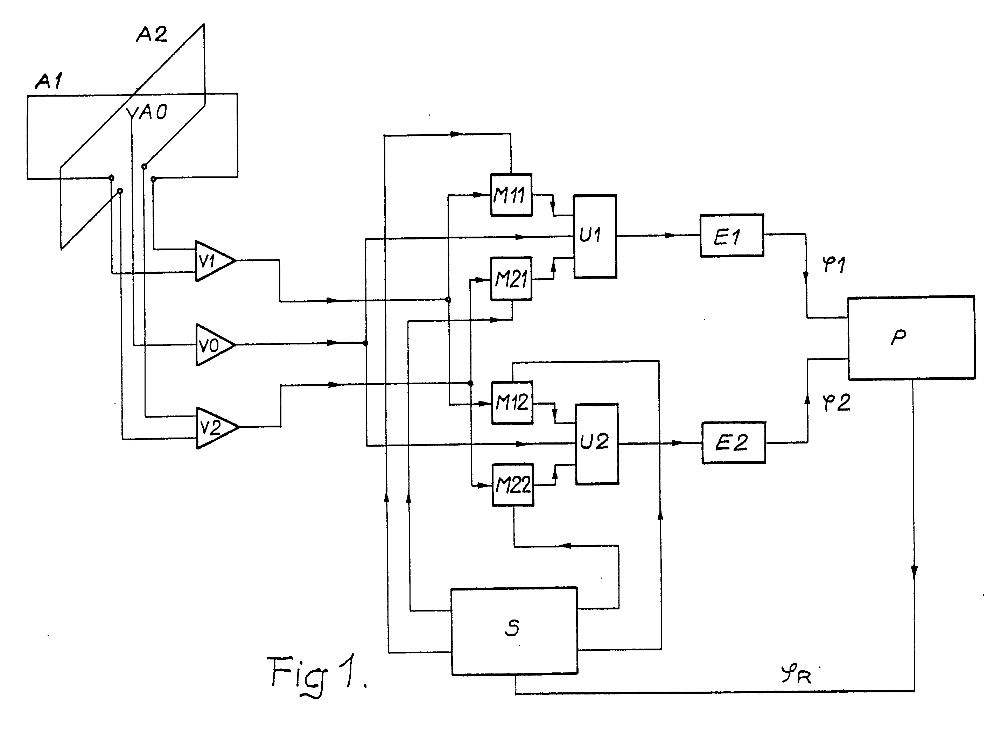

Fig. 1 zeigt einen erfindungsgemässen Umlauffunkpeiler mit simultan gegenläufig rotierender AM-Antennencharakteristik (Kardioide). In dem gezeigten Ausführungsbeispiel sind zwei senkrecht zueinander stehende Antennensysteme A1 und A2 vorgesehen, um die Darstellung zu vereinfachen; für einen erfindungsgemässen Funkpeiler können die verschiedenartigsten Antennen in beliebiger Anzahl vorgesehen sein. Die Empfangssignale der beiden Antennen A1 und A2 und einer zusätzlichen Hilfsantenne A0, die in bekannter Weise ein Bezugssignal liefert, werden in Verstärkern V1, V2 und V0 verstärkt und dann zwei getrennten Umlaufabtasteinrichtungen jeweils bestehend aus den Schalteinrichtungen M11 und M21 sowie M12 und M22 zugeführt. Diese Schalteinrichtungen M werden über eine Steuereinrichtung S so angesteuert, dass für die zwei Schalteinrichtungen M11 und M21 durch aufeinanderfolgendes Umschalten eine Rotation der Antennencharakteristik (Doppelkreisdiagramm) in der einen Umlaufrichtung, beispielsweise eine Linksrotation, erzeugt wird, über die beiden anderen Schalteinrichtungen M12 und M22 dagegen eine entsprechend gegenläufige Rotation dieser Antennencharakteristik, also beispielsweise eine Rechtsrotation. Die Schalteinrichtungen M für Rechts- bzw. Linksrotation werden mit gleichen Schaltfrequenzen angesteuert, die Rotation erfolgt also mit gleicher Umlauffrequenz. Anstelle der Schalteinrichtungen können auch Modulatoren verwendet werden, die ein weicheres Schalten und damit einen weicheren Übergang von Antenne zu Antenne ermöglichen. Die in Summierschaltungen U1 bzw. U2 zusammengefassten Ausgänge der beiden Umlaufabtasteinrichtungen für Rechts- und Linksrotation, in denen in bekannter Weise auch noch zur Bildung der Kardioidencharakteristik das Signal der Hilfsantenne A0 be-

rücksichtigt wird, führen dann zu zwei getrennten Empfangskanälen E1 bzw. E2 von gleicher Gruppenlaufzeit, in denen das Signal für Links-, bzw. Rechtsrotation getrennt verstärkt und aufbereitet und schliesslich demoduliert wird, so dass am Ausgang des Empfangskanals E1 schliesslich ein vorzugsweise sinusförmiges Peilsignal φ1 und am Ausgang des Empfangskanals E2 ein Peilsignal φ2 für die anschliessende Auswertung und Bestimmung der Einfallseinrichtung in einer Auswerteinrichtung P zur Verfügung stehen. Die beiden Peilsignale φ1 und φ2 besitzen wegen der gleichen Umlauffrequenz auch gleiche Frequenz. Die Auswertung in der Auswerteinrichtung P erfolgt in bekannter Weise unter Berücksichtigung eines von der Steuereinrichtung S synchron mit der Umlauffrequenz erzeugten Bezugssignales $\varphi_R$, und zwar wird in der Auswerteinrichtung in bekannter Weise aus der Phasendifferenz der beiden Peilsignale φ1 und φ2 die Einfallsrichtung des zu peilenden Senders bestimmt und über das Bezugssignal $\varphi_R$ die Eindeutigkeit dieses Ergebnisses festgelegt.

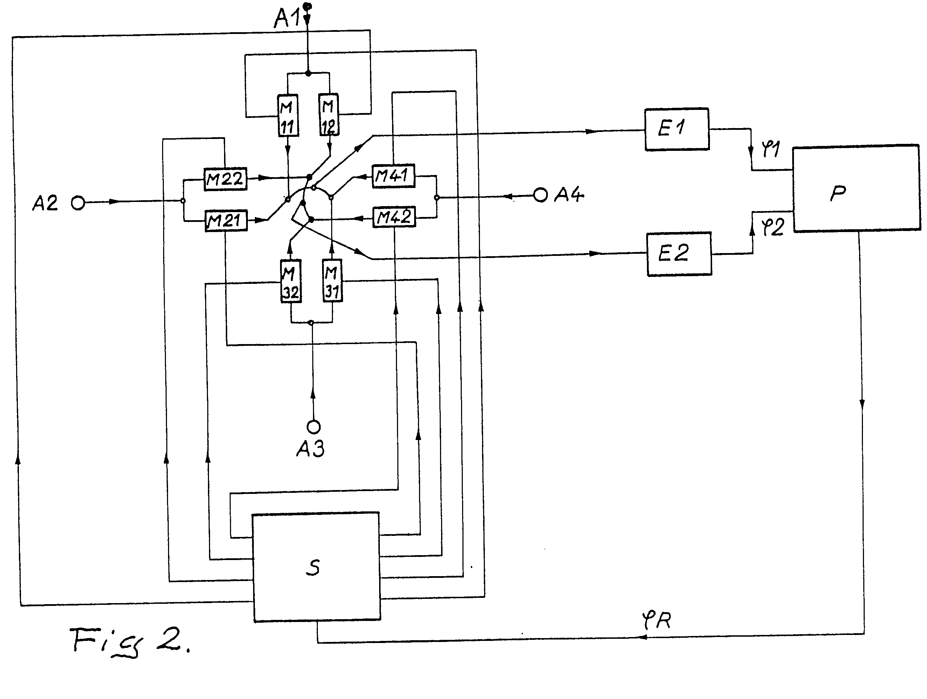

Fig. 2 zeigt einen erfindungsgemässen Umlauffunkpeiler mit rotierender PM- bzw. FM-Antennencharakteristik (Dopplerpeiler). Hier sind wiederum der Einfachheit halber nur vier Antennen A1 bis A4 vorgesehen, es können auch hier selbstverständlich wieder mehr Antennen vorgesehen sein. Es sind zwei voneinander getrennte Umlaufabtasteinrichtungen vorgesehen, und zwar wird die eine Umlaufabtasteinrichtung durch die Schalteinrichtungen M11, M21, M31 und M41 gebildet und die andere Umlaufabtasteinrichtung für die Erzeugung der gegenläufigen Rotation der Antennencharakteristik durch die Schalteinrichtungen M12, M22, M32 und M42. Die Ansteuerung der Schalteinrichtungen erfolgt mit gleicher Frequenz über die Steuereinrichtung S. Anstelle der Schalteinrichtungen können wieder Modulatoren verwendet werden. Der Ausgang der einen Umlaufabtasteinrichtung (zusammengefasste Ausgänge der Schalteinrichtungen M11, M21, M31, M41) ist mit einer Empfangseinrichtung E1 verbunden, der Ausgang der anderen Umlaufabtasteinrichtung (zusammengefasste Ausgänge der Schalteinrichtungen M12, M22, M32, M42) mit dem Eingang eines getrennten zweiten Empfangskanals E2. In diesen beiden Empfangskanälen E1 und E2 wird wieder in bekannter Weise durch FM-Demodulation ein vorzugsweise sinusförmiges Peilsignal φ1 bzw. φ2 gleicher Frequenz erzeugt und daraus wieder durch Bildung der Phasendifferenz der beiden Peilsignale φ1 und φ2 unter Berücksichtigung des Bezugssignals $\varphi_R$ in der Auswerteinrichtung P die Einfallsrichtung bestimmt.

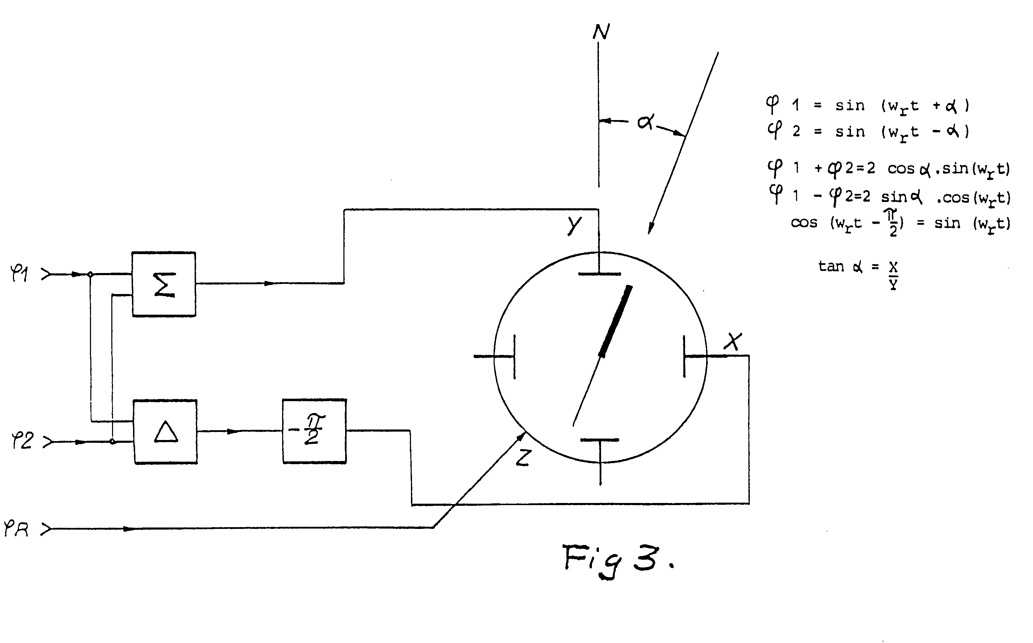

Die erfindungsgemässe Massnahme, die beiden Peilsignale φ1 und φ2 gleichzeitig und mit gleicher Umlauffrequenz zu erzeugen, ermöglicht eine besonders einfache Auswerteinrichtung, wie sie in Fig. 3 dargestellt ist. Aus den beiden Peilsignalen φ1 und φ2 wird über eine Summierschaltung Σ einerseits das Summensignal φ1+φ2 und über eine Differenzschaltung Δ das Differenzsignal φ1−φ2 gebildet. Das Summen- oder Differenzsignal wird dann über einen Phasenschieber um

$$\pm \frac{\pi}{2}$$

in der Phase verschoben und das Differenzsignal dem X-Ablenksystem und das Summensignal dem Y-Ablenksystem einer Kathodenstrahlröhre zugeführt. Aus der mathematischen Ableitung nach Fig. 3 ergibt sich damit unmittelbar der Peilwinkel α, der als Strich auf dem Schirm der Kathodenstrahlröhre erscheint.

Hierbei werden die vollen 360° des Bildschirmkreises ausgenutzt und die Anzeige ist daher zunächst zweideutig. Das synchrone Referenzsignal $\varphi_R$ wird daher zusätzlich noch in richtiger Phase (0 oder 180°, ergibt sich aus der Formel nach Fig. 3) auf den Z-Kanal der Kathodenstrahlröhre gegeben und so die falsche Peilrichtung durch Dunkelsteuerung des Kathodenstrahls ausgeblendet, so dass schliesslich nur noch der etwas dicker gezeichnete Strich mit eindeutiger Peilrichtungsanzeige α angezeigt wird. Diese Art der Peilanzeige erfolgt mit minimaler Trägheit und erlaubt in gewissem Umfang auch eine Beurteilung der Peilgüte, da Feldverzerrungen durch Reflektoren oder durch Interferenzen zweier Sender auf dem Schirmbild sichtbar werden.

Diese Art der Auswerteinrichtung besitzt darüber hinaus noch den Vorteil, dass die Strichlänge ein Mass für den Elevationswinkel ist, also den Winkel, mit welchem das Peilsignal gegenüber der eigentlichen Peilebene, in welcher die Antennen kranzförmig angeordnet sind, schräg geneigt einfällt. Durch Anbringung einer entsprechenden Skala beispielsweise in Form von konzentrischen Ringen kann damit auch der Elevationswinkel auf dem Bildschirm angezeigt werden. Eine andere Möglichkeit besteht in der Eichung eines Reglers für die Strichlänge.

Anstelle der Kathodenstrahlröhre ist natürlich auch jede andere Zwei- bzw. Dreikoordinatenanzeigevorrichtung, beispielsweise auch mechanischer Art, anwendbar.

## Patentansprüche

1. Funkpeiler, bei dem der Peilwinkel aus der Phasenlage der AM- (Fig. 1) oder FM/PM-Modulation (Fig. 2) von Peilsignalen gewonnen wird, welche durch simulierte Rotation des Diagramms einer Peilantenne (A0-A2; A1-A4) entstehen, und bei dem zur Kompensation von laufzeitbedingten Peilfehlern über eine der Antenne zugeordnete Umlaufabtasteinrichtung mit nachgeschalteter Empfangseinrichtung für Rechtsrotation und Linksrotation des Antennendiagramms gleichzeitig und mit gleicher Umlauffrequenz zwei getrennte Peilsignale (φ1, φ2) gewonnen werden, aus denen in einer Auswerteinrichtung die Einfallsrichtung bestimmt wird, dadurch gekennzeichnet, dass die beiden Peilsignale durch zwei getrennte Umlaufabtasteinrichtungen (M11/M21, M12/M22, M11/M21/M31/M41, M12/M22/M32/M42) gewonnen und über zwei getrennte Empfangseinrichtungen (E1, E2) von etwa gleicher Laufzeit der Auswerteinrichtung (P; Fig. 3) zugeführt werden.

2. Funkpeiler nach Anspruch 1, dadurch gekennzeichnet, dass in der Auswerteinrichtung die Summe und die Differenz der beiden gleichzeitig gewonnenen Peilsignale ($\varphi1$, $\varphi2$) gebildet werden ($\Sigma$, $\Delta$) und nach 90°-Phasenverschiebung

$$\left(-\frac{\pi}{2}\right)$$

eines dieser beiden Signale der Summenwert dem einen Ablenksystem (Y) und der Differenzwert dem anderen Ablenksystem (X) einer Koordinatenanzeigevorrichtung zugeführt wird.

3. Funkpeiler nach Anspruch 2, bei dem die Eindeutigkeit der Einfallsrichtung durch ein der Auswerteinrichtung synchron mit der Umlauffrequenz zugeführtes Bezugssignal ($\varphi_R$) bestimmt wird, dadurch gekennzeichnet, dass das Bezugssignal phasenrichtig dem Z-Kanal (Z) der Koordinatenanzeigevorrichtung zugeführt wird.

## Claims

1. Direction finder wherein the bearing is derived from the phase relationship of the amplitude modulation (fig. 1) or frequency/phase modulation (fig. 2) of DF signals generated by simulated rotation of the pattern of a DF antenna (A0-A2; A1-A4), and wherein two separate DF signals ($\varphi1$, $\varphi2$) generated by means of a scanning device which is associated with the antenna and followed by receiving equipment, and which provides for simultaneous clockwise and counterclockwise rotation of the antenna pattern with equal rotational frequency for the compensation of bearing errors resulting from delay differences, are used in an evaluation unit to determine the direction of incidence, characterized in that the two DF signals are obtained by means of two separate scanning units (M11, M21; M12, M22; M11, M21, M31, M41; M12, M22, M32, M42) and taken to the evaluation unit (P; fig. 3) via two separate receiving sections (E1; E2) of approximately equal delay.

2. Direction finder according to claim 1, characterized in that the sum and the difference ($\Sigma$, $\Delta$) of the simultaneously generated DF signals ($\varphi1$, $\varphi2$) are formed in the evaluation unit, and that after a 90° phase shift

$$\left(-\frac{\pi}{2}\right)$$

of either of the two signals the sum is taken to the one deflecting system (Y) and the difference to the other deflecting system (X) of a coordinate display unit.

3. Direction finder according to claim 2, wherein the unambiguity of the direction of incidence is determined by a reference signal ($\varphi_R$) applied to the evaluation unit in synchronism with the rotational frequency, characterized in that the reference signal is taken in proper phase to the Z channel (Z) of the coordinate display unit.

## Revendications

1. Radiogoniomètre dans lequel le gisement radiogoniométrique est obtenu à partir de la relation de phase de la modulation d'amplitude (fig. 1) ou de la modulation de fréquence/modulation de phase (fig. 2) de signaux radiogoniométriques qui sont obtenus par une rotation simulée du diagramme d'une antenne radiogoniométrique (A0-A2; A1-A4), et dans lequel, pour la compensation d'erreurs de relèvement résultant d'une différence de temps de propagation, on utilise un dispositif rotatif d'exploration associé à l'antenne et suivi d'un dispositif de réception produisant une rotation vers la droite et vers la gauche du diagramme d'antenne, pour générer simultanément, et avec une fréquence de rotation égale, deux signaux radiogoniométriques séparés ($\varphi1$, $\varphi2$) à partir desquels la direction d'incidence est déterminée dans un dispositif d'évaluation, et caractérisé en ce que les deux signaux radiogoniométriques sont obtenus à partir de deux dispositifs rotatifs d'exploration séparés (M11, M21; M12, M22; M11, M21, M31, M41; M12, M22, M32, M42) et sont amenés au dispositif d'évaluation (P; fig. 3) par l'intermédiaire de deux dispositifs récepteurs séparés (E1; E2) ayant un temps de propagation à peu près égal.

2. Radiogoniomètre suivant la revendication 1, caractérisé en ce que, dans le dispositif d'évaluation (P), la somme et la différence des deux signaux radiogoniométriques obtenus simultanément ($\varphi1$, $\varphi2$) sont formées ($\Sigma$, $\Delta$) et que, après un déphasage de 90°

$$\left(-\frac{\pi}{2}\right)$$

d'un de ces deux signaux, la somme est amenée à un système de déviation (Y) et la différence à l'autre système de déviation (X) d'un indicateur de coordonnées.

3. Radiogoniomètre suivant la revendication 2, dans lequel la direction d'incidence est déterminée par un signal de référence ($\varphi_R$) amené au dispositif d'évaluation en synchronisme avec la fréquence de rotation, et caractérisé en ce que le signal de référence est amené en phase avec le canal en Z (Z) du dispositif indicateur de coordonnées.

Fig 1.

Fig 2.

$\varphi 1 = \sin (w_r t + \alpha)$

$\varphi 2 = \sin (w_r t - \alpha)$

$\varphi 1 + \varphi 2 = 2 \cos \alpha . \sin(w_r t)$

$\varphi 1 - \varphi 2 = 2 \sin \alpha . \cos(w_r t)$

$\cos (w_r t - \frac{\pi}{2}) = \sin (w_r t)$

$\tan \alpha = \frac{X}{Y}$

$\varphi 1$

$\varphi 2$

$\varphi R$

$\Sigma$

$\triangle$

$-\frac{\pi}{2}$

N

$\alpha$

Y

X

Z

Fig 3.